# EUROPÄISCHE PATENTSCHRIFT

(11) **EP 0 727 530 B1**
(45) Veröffentlichungstag und Bekanntmachung des Hinweises auf die Patenterteilung: **06.10.1999**
(21) Anmeldenummer: 96101862.9
(22) Anmeldetag: 09.02.1996
(51) Int. Cl.: E03C 1/06

(54) **Handbrausen-Gelenkhalter in Verbindung mit einer Gleitstange**
Articulated hand shower holder connected to a slide bar
Support de douche à main articulé connecté à une barre de guidage

(30) Priorität: 20.02.1995 DE 19505719
(43) Veröffentlichungstag der Anmeldung: 21.08.1996
(73) Patentinhaber: Armaturenfabrik Wallisellen AG, CH-8304 Wallisellen (CH)
(72) Erfinder: Egli, Werner, CH-8194 Hüntwangen (CH)
(74) Vertreter: Wolff, Michael, Dipl.-Phys.

(56) Entgegenhaltungen:
- CH-A- 651 609
- DE-U- 1 831 193
- FR-A- 1 229 937

## Beschreibung

Die Erfindung betrifft einen Handbrausen-Gelenkhalter gemäß Oberbegriff des Anspruches 1 und einen derartigen Halter in Verbindung mit einer Gleitstange gemäß Oberbegriff des Anspruches 5.

Bei einem gattungsgemäßen Halter gemäß FR-A-1.229.937 (Bertone) ist der Bremskörper (6) am waagrecht angeordneten Hebelschenkel (5) waagrecht vor diesem angeordnet. Der sogenannte zweiarmige Betätigungshebel (4, 5) ist an seinem vertikal angeordneten Hebelschenkel (4) an dem muffenähnlichen vertikalen Halter-Teil (2) drehbar gelagert, wobei die Lagerstelle etwas eingetieft ist.

Die Hebelabschnitte zwischen Schwenkachse (3) einerseits und der Lagerungsstelle des Bremszapfens (1) sowie der Drückstelle der weitgehend freiliegenden waagrechten Bremsfeder (7) andererseits bilden den Lastarm beziehungsweise den verschieden-seitigen, gleich langen Kraftarm des Hebels. - Wie ohne weiteres eine Handbrause an diesem bekannten Halter gelagert werden kann, ist nicht offenbart.

An dem bekannten Handbrausen-Halter erscheint nachteilig, daß seine Bremseinrichtung breit baut und deren Betätigung (im Sinne einer Lüftung des Bremskörpers) ein gezieltes waagrechtes Drücken des nach unten verlängerten Kraftarmes des Hebels ungefähr in Höhe der Bremsfeder erfordert, wobei die Haltermuffe mit der betätigenden Hand auf der dem Hebel abgewandten Muffenseite umfaßt wird.

Der Erfindung liegt die Aufgabe zugrunde, einen Handbrausen-Gelenkhalter zu schaffen, bei dem im Gegensatz zum "Duschen-Gelenkhalter" (KWC) gemäß CH 651.609 A5 der Betätigungshebel nicht klappert.

Diese Aufgabe ist durch den Gelenkhalter gemäß Anspruch 1 gelöst.

Aus der erwähnten CH-651.609 ist schon ein ähnlicher "Duschen-Gelenkhalter" bekannt gewesen, der die hier gestellte Aufgabe nicht löst, weil aufgrund der von der erfindungsgemäßen Lösung abweichenden Ausführung in Kauf genommen wurde, daß der Winkelhebel (11) zur Betätigung der Bremseinrichtung (7, 9a, 11) klappern kann, da seine Lagerung erforderliches Spiel hat und der Betätigungshebel nicht von der Bremsfeder (7) beaufschlagt ist.

Ferner war aus der DE-U-1.831.193 (Rüschenbaum) ein weniger ähnlicher "Verstellbarer Halter für Handbrausen" bekannt, der die hier gestellte Aufgabe löst.

Ausgestaltungen und Weiterbildungen des Gelenkhalters gemäß Hauptanspruch sind in den Unteransprüchen gekennzeichnet.

Im Folgenden ist die Erfindung anhand einer durch die Zeichnung beispielhaft dargestellten, bevorzugten Ausführungsform des anspruchsgemäßen Gelenkhalters in Verbindung mit einer Gleitstange im Einzelnen erläutert. Es zeigt:

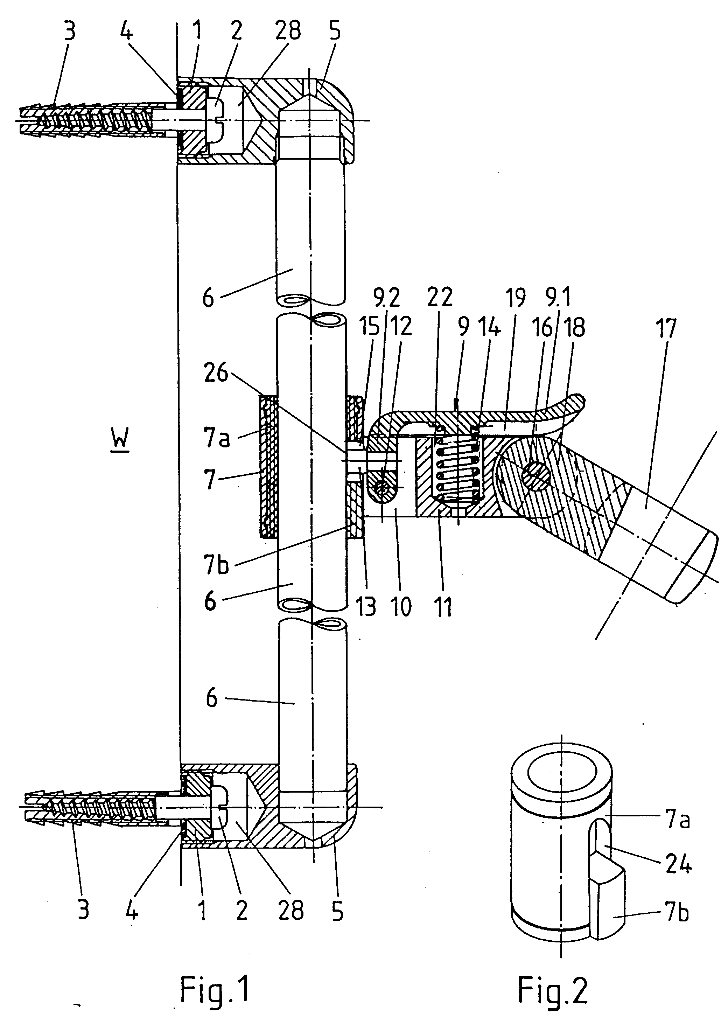

- Fig. 1: einen zentralen vertikalen Schnitt durch die Ausführungsform (ohne Handbrause)
und
- Fig. 2: eine perspektivisch dargestellte Einzelheit der Ausführungsform, nämlich die vertikale Führungsbüchse

Der erfindungsgemäße Gelenkhalter einer nicht gezeigten Handbrause besteht hauptsächlich aus einem vertikalen Teil, der als kreiszylindrische Führungshülse 7 mit eingebauter Führungsbüchse 7a ausgebildet ist, und aus einem angeformten waagrechten Teil 11, der an seinem freien Ende mit einem Drehgelenk 18 einschließlich Klemmschraube 16 für einen Brausehalter 17 versehen ist.

Zwischen Drehgelenk 18 und Hülse 7 befinden sich eine oben offene Sackbohrung 22 als Gehäuse einer vertikal eingesetzten, auf Druck beanspruchten, schraubenförmigen Bremsfeder 14, und eine den waagrechten Halterteil 11 vertikal durchbrechende Ausparung 10, die in einen halbovalen, die Hülse 7 mit Büchse 7a waagrecht durchbrechenden vertikalen Schlitz 24 übergeht, der nach unten offen und dort mittels eines nachträglich eingefügten Nockens 7b etwa zur Hälfte bis auf eine Öffnung 15 geschlossen ist.

In die vom Schlitz 24 verbleibende Öffnung 15 greift ein Bremszapfen 13 waagrecht ein, der bei Arretierung des Gelenkhalters an einer die Hülse 7 mit Büchse 7a führenden, vertikalen, kreiszylindrischen Duschen-Gleitstange 6 an dieser reibschlüssig angreift, zum Beispiel mittels einer stirnseitigen Hohlkehle oder Kuppe. Der Bremszapfen 13 ist auf der seiner Angriffsfläche 26 abgewandten Rückseite starr an einem vertikalen Schenkel 9.2 eines zweiarmigen, rechtwinkligen Betätigungshebels 9 befestigt, dessen waagrechter Schenkel 9.1 über dem waagrechten Halterteil 11 liegt und durch ein Hohlprofil 19 die Sackbohrung 22 sowie das Drehgelenk 18 oben abschirmt. Der rechte Winkel des Hebels 9 befindet sich über der oberen Mündung der Aussparung 10 in dessen Nähe, so daß der vertikale Hebelschenkel 9.2 von oben her bis in die Nähe der unteren Mündung der Aussparung 10 eingreift, an und in der ein Lagerbolzen 12 als Schwenkachse des Betätigungshebels 9 unterhalb des Bremszapfens 13 angeordnet ist. - Der kürzere Hebelarm ist also der nur auf den vertikalen Hebelschenkel 9.2 entfallende Hebelabschnitt zwischen Lagerbolzen 12 und Befestigungsstelle des Bremszapfens 13, während der längere Hebelarm der Hebelabschnitt zwischen dem Lagerbolzen 12 und der Angriffsstelle der Bremsfeder 14 ist.

Durch Niederdrücken des waagrechten Hebelschenkels 9.1 gegen die Rückstellkraft der Feder 14 wird der Bremszapfen 13 von der Gleitstange 6 vorübergehend entfernt, bis die gewünschte Höhenlage des Gelenkhalters erreicht ist, worauf der Betätigungshebel 9 losgelassen wird, wobei die Arretierung erneuert wird.

Falls die Abmessungsverhältnisse so gewählt sind, daß der vertikale Hebelschenkel 9.2- mit Bremszapfen 13 nicht in die Aussparung 10 bzw. in die Öffnung 15 eingeführt werden kann, wird der Nocken 7b nachträglich in den Schlitz 24 eingefügt.

Die parallel zu einer Wand W vor dieser angeordnete Gleitstange 6 ist an ihrem oberen und an ihrem unteren Ende in je eine von zwei gleichen, spiegelbildlich angeordneten, im wesentlichen zylindrischen Konsolen 5 eingelassen, die auf ihrer wandfernen Stirnseite geschlossen sind, während sie auf ihrer wandnahen Stirnseite eine Öffnung einer waagrechten Sackbohrung 28 aufweisen, deren Mündung mit einem Innengewinde versehen ist, das auf das Außengewinde einer zentral durchbohrten Trägerscheibe 1 geschraubt ist, die eine gekammerte Gummidichtung 4 an der Wand W einklemmt und mittels einer Befestigungsschraube 2 und eines Mauerdübels 3 an der Wand W verankert ist. Dabei befinden sich die Trägerscheibe 1, der Kopf der Befestigungsschraube 2 und die Gummidichtung 4 verdeckt in der Sackbohrung 28.

## Patentansprüche

1. Handbrausen-Gelenkhalter, mit einem vertikal angeordneten Halter-Teil (7, 7a), der beim Gebrauch des Halters an einer vertikalen Gleitstange (6) höhenverstellbar und auf der Stange (6) gleitbar ist; und mit einer Bremseinrichtung (9, 13, 14) zum Feststellen des gleitbaren Halter-Teiles (7, 7a) auf der Gleitstange (6), wobei diese Einrichtung einen um eine waagrechte Achse (12) schwenkbar gelagerten, rechtwinkligen zweischenkligen Betätigungshebel (9) aufweist , mittels dessen ein in Reibschluß zur Stange (6) bringbarer Bremskörper (13) gegen die Rückstellkraft einer Bremsfeder (14) lüftbar ist, die gegen den Hebelabschnitt zwischen freiem Hebelende und Schwenkachse (12) drückt, dadurch **gekennzeichnet**, daß der Bremskörper (13) an einem vertikal angeordneten Hebelschenkel (9.2) senkrecht zu diesem angeordnet ist, daß ein waagrecht angeordnetes Halter-Teil (11) mit dem vertikalen Halter-Teil (7, 7a) eine T-Form des Halters bildet, daß die vertikal gestellte Bremsfeder (14), die gegen einen waagrecht angeordneten Hebelschenkel (9.1) drückt, mittels des waagrechten Halter-Teiles (11) behaust ist, an dem ein Brausehalter (17) angelenkt ist, daß zwischen dem Bremskörper (13) einerseits und dem Federgehäuse (22) andererseits ein beim Gebrauch des Halters vertikal angeordneter Durchbruch (10) des waagrechten Halterteiles (11) vorhanden ist, in den der vertikal angeordnete Schenkel (9.2) des Hebels (9) eingreift, dessen Schwenkachse (12) in dem vertikal angeordneten Durchbruch (10) unterhalb des Bremskörpers (13) angeordnet ist, wobei der kürzere Lastarm des Hebels (9) der nur auf den vertikalen Hebelschenkel (9.2) entfallende gerade Hebelabschnitt zwischen Schwenkachse (12) und Lagerungsstelle des Bremskörpers (13) ist, und der längere Kraftarm der gewinkelte Hebelabschnitt zwischen der Schwenkachse (12) und der Drückstelle der Bremsfeder (14) ist.

2. Handbrausen-Gelenkhalter nach Anspruch 1, dadurch gekennzeichnet, daß der vertikale Hebelschenkel (9.2) von oben her in den vertikalen Durchbruch (10) eingreift.

3. Handbrausen-Gelenkhalter nach Anspruch 2, dessen vertikal angeordneter Teil eine Führungshülse (7) aufweist, die einen beim Gebrauch des Halters waagrecht angeordneten Durchbruch (15) für den Durchtritt des Bremskörpers (13) aufweist, dadurch **gekennzeichnet**, daß der vertikal angeordnete Durchbruch (10) des waagrecht angeordneten Halterteiles (11) und der waagrecht angeordnete Durchbruch (15) ineinander übergehen und letzterer nach unten bis zur unteren Stirnfläche der Hülse (7) verlängert ist, wobei ein eingesetzter Nocken (7b) diese Verlängerung schließt.

4. Handbrausen-Gelenkhalter nach einem der Ansprüche 1 bis 3, dadurch gekennzeichnet, daß der waagrecht angeordnete Hebelschenkel (9.1) ein unten konkaves Hohlprofil (19) aufweist und das Federgehäuse (22) sowie das Gelenk (18) des Brausehalters (17) überlagert.

5. Handbrausen-Gelenkhalter nach einem der Ansprüche 1 bis 4, in Verbindung mit einer Gleitstange (6), die an ihren beiden Enden mittels je einer Konsole (5) an einer Wand (W) vor dieser lagerbar ist, dadurch **gekennzeichnet**, daß jede Konsole (5) an ihrer wandfernen Stirnseite geschlossen ist und wandseitig ein Innengewinde aufweist, das mit einem Außengewinde einer zentral durchbohrten Trägerscheibe (1) verschraubbar ist, die mittels Schraube (2) und Mauerdübel (3) an der Wand (W) befestigbar ist.

6. Handbrausen-Gelenkhalter in Verbindung mit einer Gleitstange (6), nach Anspruch 5, dadurch gekennzeichnet, daß die Wandseite der Trägerscheibe (1) mit einem auf der Schraube (2) sitzenden Dichtring (4) belegt ist.

## Claims

1. Hand shower articulated holder with a vertically arranged holder part (7, 7a), which in use of the holder is adjustable in height at a vertical slide rod (6) and slidable on the rod (6), and with a braking device (9, 13, 14) for fixing the slidable holder part (7, 7a) on the slide rod (6), wherein this device comprises a right-angled, double-limbed actuating lever (9) which is mounted to be pivotable about a horizontal axis (12) and by means of which a brake body (13) able to be brought into friction locking relative to the rod (6) can be relieved against the restoring force of a brake spring (14), which presses against the lever portion between the free lever end and the pivot axis (12), characterised in that the brake body (13) is arranged at a vertically arranged lever limb (9.2) and perpendicularly thereto, that a horizontally arranged holder part (11) together with the vertical holder part (7, 7a) forms a T-shape of the holder, that the vertically set brake spring (14), which presses against a horizontally arranged lever limb (9.1), is housed by means of the horizontal holder part (11), at which a shower holder (17) is articulated, that present between the brake body (13) on the one hand and the spring housing (22) on the other hand is a through passage (10), which in use of the holder is vertically arranged and in which the vertically arranged limb (9.2) of the lever (9) engages, of the horizontal holder part (11), the pivot axis (12) of which limb (9.2) is arranged in the vertically arranged through passage (10) to be below the brake body (13), wherein the shorter load arm of the lever (9) is the straight lever portion, which is allotted only to the vertical lever limb (9.2), between the pivot axis (12) and bearing point of the brake body (13) and the longer force arm is the angled lever portion between the pivot axis (12) and the pressure point of the brake spring (14).

2. Hand shower articulated holder according to claim 1, characterised in that the vertical lever limb (9.2) engages from above into the vertical passage (10).

3. Hand shower articulated holder according to claim 2, the vertically arranged part of which comprises a guide sleeve (7) which has a through passage (15), which in use of the holder is arranged to be horizontal, for the passage of the brake body (13), characterised in that the vertically arranged through passage (10) of the horizontally arranged holder part (11) and the horizontally arranged through passage (15) merge into one another and the latter is prolonged downwardly to the lower end face of the sleeve (7), wherein an inserted dog (7b) closes this prolongation.

4. Hand shower articulated holder according to one of claims 1 to 3, characterised in that the horizontally arranged lever limb (9.1) has a lower concave hollow profile (19) and overlies the spring housing (22) as well as the pivot joint (18) of the shower holder (17).

5. Hand shower articulated holder according to one of claims 1 to 4, in conjunction with a slide rod (6) which can be mounted at its two ends, by means of respective brackets (5), on a wall (W) in front thereof, characterised in that each bracket (5) is closed at its end face remote from the wall and has at the wall side an internal thread which can be screwed to an external thread of a centrally drilled support disc (1) fastenable to the wall (W) by means of a screw (2) and masonry plug (3).

6. Hand shower articulated holder in conjunction with a slide rod (6), according to claim 5, characterised in that the wall side of the support disc (1) is covered by a sealing ring (4) seated on the screw (2).

## Revendications

1. Support articulé de douche à main comprenant une partie de support placée verticalement (7, 7a) qui, lors de l'utilisation du support, peut être réglée en hauteur sur une barre verticale de glissement (6) et glisser sur celle-ci, et un dispositif de freinage (9, 13, 14) pour l'immobilisation de la partie de support glissante (7, 7a) sur la barre de glissement (6), ce dispositif présentant un levier de commande à deux branches à angle droit (9) monté basculant autour d'un axe horizontal (12) qui permet de desserrer un corps de freinage (13), qui peut être mis en contact avec friction avec la barre (6), contre la force de rappel d'un ressort de freinage (14) qui exerce une pression sur la partie du levier située entre l'extrémité libre de celui-ci et l'axe de basculement (12), caractérisé par le fait que le corps de freinage (13) est placé sur une branche du levier placée verticalement (9.2) perpendiculairement à celle-ci, qu'une partie de support placée horizontalement (11) donne au support avec la partie de support verticale (7, 7a) une forme en T, que le ressort de freinage (14), placé verticalement, qui exerce une pression sur une branche du levier placée horizontalement (9.1) du levier, est logé dans la partie de support horizontale (11), à laquelle est articulé un support de douche (17), qu'entre le corps de freinage (13) et le logement de ressort (22) existe une ouverture (10), placée verticalement lors de l'utilisation du support, de la partie de support horizontale (11), dans laquelle s'engage la branche verticale (9.2) du levier (9), l'axe de basculement (12) de celui-ci étant placé dans l'ouverture verticale (10) au-dessous du corps de freinage (13), le bras court de charge du levier (9) étant la partie droite de celui-ci afférente seulement à la branche verticale (9.2) de celui-ci, située entre l'axe de basculement (12) et l'endroit de montage du corps de freinage (13), et le bras long de force étant la partie coudée du levier située entre l'axe de basculement (12) et l'endroit de pression du ressort de freinage (14).

2. Support articulé de douche à main selon la revendication 1, caractérisé par le fait que la branche verticale (9.2) du levier s'engage d'en haut dans l'ouverture verticale (10).

3. Support articulé de douche à main selon la revendication 2, dont la partie placée verticalement présente une douille de guidage (7) qui présente une ouverture (15), placée horizontalement lors de l'utilisation du support, pour le passage du corps de freinage (13), caractérisé par le fait que l'ouverture placée verticalement (10), de la partie de support placée horizontalement (11), et l'ouverture placée horizontalement (15) se fondent l'une dans l'autre et la seconde est prolongée vers le bas jusqu'à la face frontale inférieure de la douille (7), un ergot rapporté (7b) fermant le prolongement.

4. Support articulé de douche à main selon l'une des revendications 1 à 3, caractérisé par le fait que la branche du levier placée horizontalement (9.1) présente un profil creux concave en bas (19) et se superpose au logement de ressort (22) et à l'articulation (18) du support de douche (17).

5. Support articulé de douche à main selon l'une des revendications 1 à 4, associé à une barre de glissement (6) qui peut être montée à ses deux extrémités, chacune au moyen d'une console (5), sur un mur (W) devant celle-ci, caractérisé par le fait que chaque console (5) est fermée sur son côté frontal éloigné du mur et présente du côté du mur un filetage intérieur dans lequel peut se visser un filetage extérieur d'une rondelle support percée au centre (1) qui peut être fixée au mur (W) au moyen d'une vis (2) et d'un goujon de mur (3).

6. Support articulé de douche à main associé à une barre de glissement (6), selon la revendication 5, caractérisé par le fait que le côté mur de la rondelle support (1) est garni d'un joint annulaire d'étanchéité (4) qui s'appuie sur la vis (2).
